# EUROPÄISCHE PATENTSCHRIFT

(11) **EP 1 264 975 B1**
(45) Veröffentlichungstag und Bekanntmachung des Hinweises auf die Patenterteilung: **21.11.2012**
(21) Anmeldenummer: 02001842.0
(22) Anmeldetag: 26.01.2002
(51) Int. Cl.: F02C 7/236, F02C 7/22

(54) **Verfahren zur Brennstoffversorgung für eine Fluggasturbine**
Method of fuel supply for an aircraft gas turbine
Méthode d' alimentation en carburant pour un réacteur

(30) Priorität: 05.06.2001 DE 10127196
(43) Veröffentlichungstag der Anmeldung: 11.12.2002
(73) Patentinhaber: Rolls-Royce Deutschland Ltd & Co KG, 15827 Dahlewitz (DE)
(72) Erfinder: Hansen, Volker, 15526 Reichenwalde (DE)

(56) Entgegenhaltungen:
- EP-A- 1 143 128
- WO-A-92/07179
- GB-A- 763 448
- GB-A- 912 762
- US-A- 4 550 561
- US-A- 4 899 535
- US-A- 5 152 146
- US-B1- 6 487 847

## Beschreibung

Die Erfindung bezieht sich auf ein Verfahren zur Brennstoffversorgung für ein mit zumindest einer Fluggasturbine versehenes Flugzeug.

Brennstoffversorgungssysteme von Flugzeugen verwenden zusätzlich zu den flugzeugseitig vorgesehenen Tankpumpen Saugförderanlagen. Diese arbeiten auch nach einem Totalausfall der elektrischen Bordstromversorgung, bei welchem die Tankpumpen selbst nicht mehr funktionsfähig wären. Bei den aus dem Stand der Technik bekannten Brennstoffversorgungssystemen werden zur Steigerung der Saugförderkapazität von Fluggasturbinen-Antrieben Strahlpumpen eingesetzt, welche die in dem Brennstoffsystem vorhandene, ausgegaste Luft aus dem flugzeugseitigen Brennstoffversorgungssystem entfernen. Die Ausgasung der Luft erfolgt unter anderem wegen der Druckabsenkung im Saugbetrieb.

Die Triebstrahlversorgung einer derartigen Saugpumpe erfolgt üblicherweise von der triebwerkseitigen Brennstoffniederdruckpumpe. Dabei wird die ausgegaste Luft in der Brennstoffleitung von der Strahlpumpe angesaugt, mit dem Treibstrahl zu kleinen Blasen vermischt und dann in den Einlass der Brennstoffniederdruckpumpe geleitet. Diese gleichmäßig im Brennstoff verteilten kleinen Blasen verbessern die Saugförderkapazität des Pumpen-Impellers. Dabei ist zu beachten, dass eine vollständige Trennung von Luft und Brennstoff in zwei Phasen zu größeren Flughöhen hin verschoben wird.

Bei den bisherigen Systemen erweist es sich als nachteilig, dass diese Strahlpumpensysteme, welche zur Steigerung der Saugförderkapazität von Turbinenantrieben eingesetzt werden, in ihrer Leistung begrenzt sind, da ihr Betrieb von der Förderleistung der Brennstoffniederdruckpumpe abhängt. Wenn mit steigender Flughöhe der Förderdruck der Brennstoffniederdruckpumpe im Saugbetrieb zunehmend unregelmäßig wird, verringert sich zwangsläufig die Saugleistung der Strahlpumpe bis zu einem Punkt, wo diese keinen Brennstoff mehr ansaugt.

Ein weiterer Nachteil ergibt sich aus der Erwärmung des Brennstoffs in der Niederdruckpumpe. Diese Erwärmung entsteht durch die verlustbehaftete Kraftstoffzirkulation der Strahlpumpen-Triebstrahlversorgung um die Pumpe. Die resultierende Erwärmung erhöht zwangsläufig den Dampfdruck des Brennstoffs. Hierdurch erfolgt der Eintritt in den Siedebereich des Brennstoffs bei einer vergleichbar niedrigeren Flughöhe.

Zur Vermeidung der beschriebenen Probleme ist es aus Stand der Technik bekannt, möglichst große Leitungsdurchmesser für die Brennstoffversorgungsleitungen zum Triebwerk zu verwenden, um die Leitungsdruckverluste möglichst gering zu halten. Hierdurch ist es möglich, im Saugbetrieb das Ausgasen der im Kraftstoff gelösten Luft als Folge der Druckabsenkung zu minimieren. Ein wesentlicher Nachteil dieser Vorgehensweise liegt darin, dass sich aus den großen Leitungsdurchmessern ein niedrige Durchflussgeschwindigkeit ergibt. Diese führt dazu, dass sich die ausgegaste Luft in der Brennstoffleitung in Leitungshochpunkten, beispielsweise im Hauptfahrwerksschacht, sammelt, anstatt mit dem Brennstoff weggespült zu werden. Diese Luft kann folglich nicht von der triebwerksseitigen Strahlpumpe erfasst werden und füllt im Extremfall die flugzeugseitige Brennstoffversorgungsleitung über die volle Länge an. Besonders kritisch ist dieser Vorgang bei heckgetriebenen Flugzeugen, wenn sich beim Herunternehmen der Flugzeugnase, beispielsweise zur Einleitung des Sinkflugs, die gesamte Luftmenge plötzlich zum Triebwerk bewegt und dort zu einem Zusammenbruch des Förderstromes der triebwerkseitigen Brennstoffniederdruckpumpe führen kann. Die Folge ist ein Flammenabriss in der Brennkammer und damit ein Verlöschen und Herunterlaufen des Triebwerks.

Die US 4,899,535 beschreibt ein Kraftstoffverteilungssystem für ein Luftfahrzeug-Strahltriebwerk, insbesondere eine Kraftstoffkühlvorrichtung in einem solchen System.

Die WO 92/07179 beschreibt ein Kraftstoff-Versorgungssystem zum Bereitstellen einer Brennstoffströmung zu einem Gasturbinenmotor, welches zwei Verdrängerpumpen umfasst, wobei eine erste Stufe eine elektrische Förderpumpe und eine zweite Stufe eine Ejektorpumpe umfasst, die nur arbeitet, wenn die elektrischen Förderpumpe nicht in Betrieb ist und eine dritte Stufe antreibt.

Die GB 912,762 beschreibt ein Kühlsystem, in dem die Lager eines Gasturbinentriebwerks in einem Wärmeaustauscher mittels strömenden Kraftstoffs aus einem Vorratsbehälter durch ein Rohr und einen Durchgang gekühlt werden.

Der Erfindung liegt die Aufgabe zugrunde, ein Verfahren zur Brennstoffversorgung zu schaffen, welches unter Vermeidung der Nachteile des Standes der Technik eine sichere Brennstoffversorgung der Fluggasturbine ermöglichen.

Erfindungsgemäß wird die Aufgabe durch die Merkmale der nebengeordneten Ansprüche gelöst, die jeweiligen Unteransprüche zeigen weitere vorteilhafte Ausgestaltungen der Erfindung.

Erfindungsgemäß ist somit vorgesehen, eine erhöhte Durchflussgeschwindigkeit in der Brennstoffleitung zum Triebwerk vorzusehen. Hieraus ergeben sich erhebliche Vorteile. Obwohl mit der erhöhten Durchflussgeschwindigkeit zwangsläufig die Strömungsverluste ansteigen, verbessern sich trotzdem die Eintrittsbedingungen am Triebwerk. Im Gegensatz zu dem aus dem Stand der Technik bekannten Fall, bei welchem die triebwerksseitige Brennstoffniederdruckpumpe von einer plötzlich auftretenden großen Luftmenge praktisch überwältigt wird, kann erfindungsgemäß mit der Erhöhung der Durchflussgeschwindigkeit Luft mit der Strömung kontinuierlich und in verträglichen Mengen der Brennstoffniederdruckpumpe zugeführt und von dort aus im Hochdrucksystem weiter verdichtet werden. Unerwünschte Ansammlungen großer Mengen von ausgegaster Luft sind somit sicher vermeidbar.

Erfindungsgemäß ist es möglich, die Durchflussgeschwindigkeit der flugzeugseitigen Brennstoffleitungsgeometrie anzupassen, wobei einerseits der resultierende Druckabfall und andererseits die ausreichende Strömungsgeschwindigkeit berücksichtigt werden können, um über den gesamten Höhenbereich (Seehöhe bis maximale Flughöhe) eine ausreichende Brennstoffversorgung sicherzustellen.

Eine erfindungsgemäß besonders vorteilhafte Vorgehensweise zur Erhöhung der Durchflussgeschwindigkeit in der flugzeugseitigen Brennstoffversorgungsleitung ist die Erhöhung des Brennstoffmassenstromes über den normalen Triebwerksbedarf hinaus. Hierfür ist erfindungsgemäß ein Rezirkulationssystem vorgesehen, bei dem der Überschussbrennstoff vom Triebwerk wieder zurück zum Tank gefördert wird. Dies ist problemlos möglich, da moderne Triebwerke (Fluggasturbinen) eine mehr als ausreichende Pumpenkapazität aufweisen, um diesen zusätzlichen Massenstrom aufzubringen. Die große Pumpenkapazität ist dadurch bedingt, dass der bestimmende Betriebspunkt für die Pumpenauslegung oftmals der "Windmühlenstart" ist, bei dem das Triebwerk im Fahrtwind mitdrehend angelassen wird. Die triebwerksseitige Hochdruckpumpe muss dabei schon bei entsprechend geringen Drehzahlen einen relativ hohen Druck erzeugen, wodurch sich eine signifikante Überkapazität hinsichtlich der Pumpenkapazität für alle anderen Betriebspunkte ergibt. Das erfindungsgemäße Rezirkulationssystem kann somit in einfachster Weise in Verbindung mit üblichen Fluggasturbinen verwendet werden.

Erfindungsgemäß ist es möglich, das Rezirkulationssystem so auszubilden, dass dieses den Rezirkulationsfluss des Brennstoffs entweder hinter der Niederdruckturbine oder hinter der Hochdruckturbine abnimmt. Durch beide Vorgehensweisen wird der Brennstoffmassenstrom in der flugzeugseitigen Brennstoffversorgungsleitung gleichermaßen erhöht, es ergeben sich jedoch unterschiedliche Auswirkungen auf den Wärmehaushalt des Triebwerks. Die Brennstofftemperatur hinter der Niederdruckpumpe liegt üblicherweise nur leicht über der Tanktemperatur, wogegen die Brennstofftemperatur auf der Hochdruckseite durch den Wärmeeintrag des Ölkühlers und der Hochdruckpumpe bei über 100° C liegen kann. Welche Vorgehensweise zur Verwendung kommt, hängt im Wesentlichen von der Gesamtkonfiguration des triebwerksseitigen/flugzeugseitigen Brennstoffsystems ab. Die erfindungsgemäßen Vorteile sind bei beiden Vorgehensweisen gegeben.

Um die Wirkungsweise des erfindungsgemäßen Verfahrens bzw. des erfindungsgemäßen Brennstoffversorgungssystems nachzuweisen, wurde zum einen auf einem Teststand maßstabsgetreu das flugzeugseitige und das triebwerkseitige Brennstoffsystem unter Verwendung von originalen Rohrleitungen und Anbaugeräten einer Boeing 717-200 mit originalen BR715-Fluggasturbinen nachgebaut. Dabei ergab sich im Teststand ein Steigflug-Saughöhenlimit mit JET A wie folgt:
- keine Rezirkulation 34.000 ft
- Rezirkulation von der Niederdruckseite 53.000 ft
- Rezirkulation von der Hochdruckseite 49.000 ft.

Bei einem nachfolgenden Test mit einer Boeing 717-200 ergaben sich im Flugtest folgende Steigflug-Saughöhenlimits mit JET A:
- keine Rezirkulation 33.000 ft
- Rezirkulation von der Hochdruckseite 37.000 ft.

Das im Vergleich zum Teststand niedrige Steigflug-, Saughöhenlimit des Testflugzeuges bedeutet kein physikalisches Limit, da eine größere Flughöhe nicht getestet wurde. Die Teststandergebnisse demonstrieren daher die signifikanten Leistungsreserven in dem Saughöhenlimit des Testflugzeuges in Verbindung mit dem erfindungsgemäßen Brennstoffversorgungssystem. Die Flugtests beinhalteten dynamische Manöver wie Kurvenflug und negative Beschleunigung zur Demonstration von stabilem Triebwerkslauf.

Die erfindungsgemäßen Vorteile treten auch bei leichtflüchtigen Kraftstoffsorten, wie etwa JP-4 auf. Das Saughöhenlimit im Steigflug stieg dabei von 23.500 ft auf 27.000 ft, das Saughöhenlimit bei konstanter Höhe sogar von 25.000 ft auf 37.000 ft.

Im Folgenden wird die Erfindung anhand zweier Ausführungsbeispiele in Verbindung mit der Zeichnung beschrieben. Dabei zeigt:
- Fig. 1: eine schematische Darstellung des Brennstoffversorgungssystems mit Rezirkulationsfluss von der Niederdruckseite, und
- Fig. 2: eine Darstellung, analog Fig. 1, mit Rezirkulationsfluss von der Hochdruckseite.

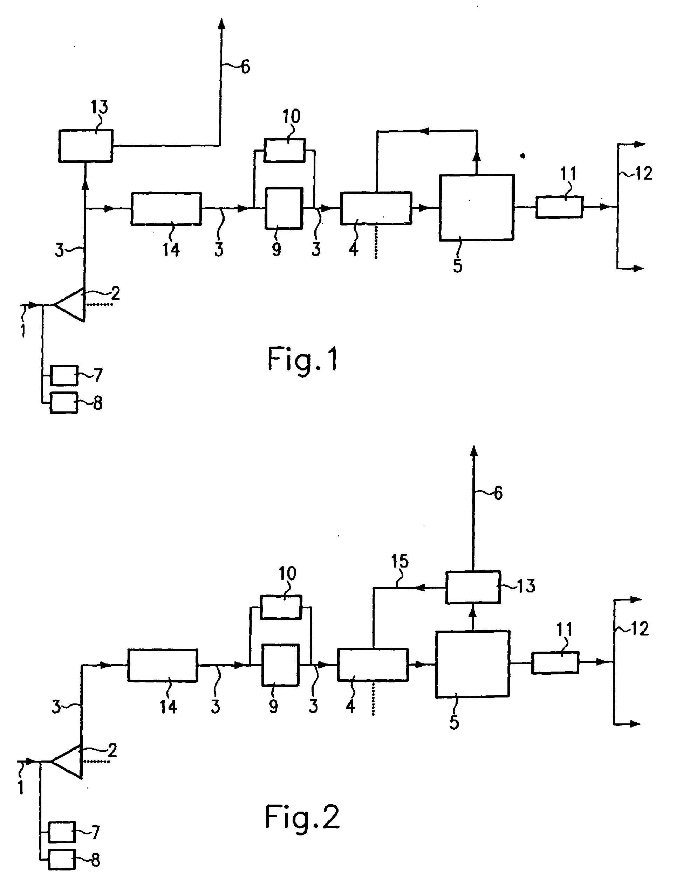

Die Fig. 1 zeigt in schematischer Darstellung ein erstes Ausführungsbeispiel des erfindungsgemäßen Brennstoffversorgungssystems. Brennstoff wird mittels einer ersten Brennstoffleitung 1 einer Niederdruckpumpe 2 zugeführt. Diese wird über das Getriebe angetrieben. Am Eingang der Niederdruckpumpe 2 sind Druckschalter 7, 8 vorgesehen.

Die Niederdruckpumpe 2 ist über eine zweite Brennstoffleitung 3 mit einer Hochdruckpumpe 4 verbunden. In der zweiten Brennstoffleitung 3 ist ein Filter 9 (LP-Filter) zwischengeschaltet, welchem parallel ein Druckwächter 10 zugeordnet ist.

Der Hochdruckpumpe 4 ist eine Brennstoffregeleinheit 5 nachgeordnet (fuel metering unit). Nachfolgend ist ein Durchflussmesser 11 vorgesehen (flowmeter), bevor sich die Brennstoffleitung in die einzelnen Brennerleitungen 12 (burner manifold) verzweigt.

Bei dem in Fig. 1 gezeigten Ausführungsbeispiel ist an die zweite Brennstoffleitung 3 ein Rezirkulationsventil 13 angeschlossen (FRTT valve). Dieses wiederum ist mit einer Brennstoffrückführleitung 6 verbunden. Durch diese ist eine Rezirkulation überflüssigen Brennstoffs in einen nicht dargestellten Tank möglich.

Bei dem in Fig. 2 gezeigten Ausführungsbeispiel unterscheidet sich die Anordnung dadurch, dass das Rezirkulationsventil (FRTT valve) nach der Hochdruckpumpe 4 angeordnet ist. Zusätzlich ist hier noch eine Rücklaufleitung 15 (spill return flow) von dem Rezirkulationsventil 13 zu der Hochdruckpumpe 4 vorgesehen.

Bei beiden Ausführungsbeispielen ist mit dem Bezugszeichen 14 ein Wärmetauscher (engine heat exchanger) bezeichnet.

Sowohl die Niederdruckpumpe 2 als auch die Hochdruckpumpe 4 werden jeweils von dem Getriebe (gear box) angetrieben.

Bei dem in Fig. 1 gezeigten Ausführungsbeispiel wird dann, wenn die beiden Druckschalter 7, 8 am Eingang der Niederdruckpumpe 2 eine Saugfördersituation melden, sofort der Rezirkulationsfluss eingeschaltet. Eine Blende in dem Rezirkulationsventil regelt den Brennstoff-Durchfluss auf den gewünschten Wert.

Bei dem in Fig. 2 gezeigten Ausführungsbeispiel, bei welchem der Rezirkulationsfluss hinter der Niederdruckpumpe 2 abgenommen wird, ergibt sich insbesondere dann ein Vorteil, wenn eine Kraftstoffaufheizung nicht erwünscht ist. Weiterhin ist es möglich, ein existierendes Rohrleitungssystem im Flugzeug mitzuverwenden, so dass sich die Installationskosten entsprechend erniedrigen.

Die Erfindung ist nicht auf die gezeigten Ausführungsbeispiele beschränkt, vielmehr ergeben sich im Rahmen der Erfindung vielfältige Abwandlungs- und Modifikationsmöglichkeiten.

### Bezugszeichenliste:

- 1: Erste Brennstoffleitung
- 2: Niederdruckpumpe
- 3: Zweite Brennstoffleitung
- 4: Hochdruckpumpe
- 5: Brennstoffregeleinheit
- 6: Brennstoffrückführleitung
- 7: Druckschalter
- 8: Druckschalter
- 9: LP-Filter
- 10: Druckwächter
- 11: Durchflussmesser
- 12: Brennerleitungen
- 13: Rezirkulationsventil
- 14: Wärmetauscher
- 15: Rückführleitung

## Patentansprüche

1. Verfahren zur Brennstoffversorgung einer in ein Flugzeug eingebauten Fluggasturbine, bei dem in einem Brennstoffversorgungssystem der Brennstoff aus einem Tank über eine erste Brennstoffleitung (1) zu einer Niederdruckpumpe (2) und von dieser über eine zweite Brennstoffleitung (3) zu einer Hochdruckpumpe (4) mit nachgeschalteter Brennstoffregeleinheit (5) gelangt, wobei der Brennstoff in einer über den normalen Triebwerksbedarf hinausgehenden erhöhten Menge durch die Brennstoffleitungen (1, 3) gefördert wird und der überschüssige Brennstoff über eine Brennstoffrückführleitung (6) in den Tank zurückgeführt wird,
**dadurch gekennzeichnet, dass**:
a. sofort ein Rezirkulationsflusseingeschaltet wird, wenn zwei Druckschalter (7, 8) am Eingang der Niederdruckpumpe (2) eine Saugfördersituation melden,
b. der Brennstoff in entsprechend erhöhter Geschwindigkeit durch die Brennstoffleitungen (1, 3) gefördert wird, wobei die Durchflussgeschwindigkeit der flugzeugseitigen Brennstoffleitungsgeometrie angepasst wird, wobei einerseits der resultierende Druckabfall und andererseits die ausreichende Strömungsgeschwindigkeit berücksichtigt wird, um über den gesamten Höhenbereich von der Seehöhe bis zur maximalen Flughöhe eine ausreichende Brennstoffversorgung sicherzustellen, unddabei ausgegaste Luft kontinuierlich und in verträglichen Mengen mitgeführt wird, so dass unerwünschte Ansammlungen von ausgegaster Luft sicher vermeidbar sind.

2. Verfahren nach Anspruch 1, wobei der überschüssige Brennstoff hinter der Niederdruckpumpe (2) abgezogen wird.

3. Verfahren nach Anspruch 2, wobei der Brennstoff aus der zweiten Brennstoffleitung (3) über eine mit dem Tank verbundene Brennstoffrückführleitung (6) abgezogen wird.

4. Verfahren nach Anspruch 1, wobei der überschüssige Brennstoff hinter der Hochdruckpumpe (4) abgezogen wird.

5. Verfahren nach Anspruch 4, wobei der Brennstoff über die Brennstoffregeleinheit (5) und eine mit dieser und dem Tank verbundene Brennstoffrückführleitung (6) abgezogen wird.

## Claims

1. Method for the fuel supply of an aircraft gas turbine installed in an aircraft where in a fuel supply system the fuel is transported from a tank via a first fuel line (1) to a low-pressure pump (2) and from that pump via a second fuel line (3) to a high-pressure pump (4) with downstream fuel metering unit (5), with the fuel being delivered in increased quantity exceeding normal engine requirements via the fuel lines (1, 3) and excess fuel being returned to the tank via a fuel return line (6),
**characterized in that**
a) a recirculation flow is immediately activated if two pressure switches (7, 8) at the inlet of the low-pressure pump (2) signal a suction delivery situation,
b) fuel is delivered via the fuel lines (1, 3) at a correspondingly increased velocity, with the flow rate being adapted to the aircraft-side fuel line geometry, with on the one hand the resulting pressure drop and on the other hand the adequate flow velocity being considered, in order to ensure throughout the entire altitude range from sea level to maximum flight altitude an appropriate fuel supply, and that outgassed air is continuously and in manageable quantities delivered so that undesired accumulations of outgassed air are safely avoidable.

2. Method in accordance with Claim 1, with excess fuel being drawn off downstream of the low-pressure pump (2).

3. Method in accordance with Claim 2, with fuel from the second fuel line (3) being drawn off via a fuel return line (6) connected to the tank.

4. Method in accordance with Claim 1, with excess fuel being drawn off downstream of the high-pressure pump (4).

5. Method in accordance with Claim 4, with fuel being drawn off via the fuel metering unit (5) and a fuel return line (6) connected to said metering unit and to the tank.

## Revendications

1. Procédé d'alimentation en carburant d'une turbine à gaz aéronautique montée dans un avion, selon lequel dans un système d'alimentation en carburant, le carburant provenant d'un réservoir parvient, en passant par une première conduite de carburant (1), dans une pompe à basse pression (2) et de là, en passant par une seconde conduite de carburant (3), arrive dans une pompe à haute pression (4) avec régulateur d'alimentation en carburant (5) en aval, sachant que le carburant est refoulé en quantité élevée, dépassant la consommation normale du moteur, à travers les conduites de carburant (1, 3) et que le carburant excédentaire est ramené dans le réservoir en passant par une conduite de récupération de carburant (6),
**caractérisé en ce**
a) **qu'**un flux de recirculation est immédiatement amorcé quand deux manostats (7, 8) à l'entrée de la pompe à basse pression (2) signalent une situation de refoulement par aspiration,
b) **que** le carburant est refoulé à travers les conduites de carburant (1, 3) à une vitesse accrue en conséquence, la vitesse d'écoulement étant adaptée à la géométrie côté avion des conduites de carburant, sachant que sont prises en compte d'une part la chute de pression en résultant et d'autre part la vitesse d'écoulement adéquate pour assurer une alimentation en carburant suffisante sur la totalité de la plage d'altitudes, du niveau de la mer au plafond absolu, et que de l'air dégazé est entraîné en permanence et en quantités compatibles, si bien que des accumulations indésirables d'air dégazé peuvent être fiablement évitées.

2. Procédé selon la revendication n°1, sachant que le carburant excédentaire étant aspiré en aval de la pompe à basse pression (2).

3. Procédé selon la revendication n°2, sachant que le carburant provenant de la seconde conduite de carburant (3) étant aspiré par une conduite de récupération de carburant (6) reliée au réservoir.

4. Procédé selon la revendication n°1, sachant que le carburant excédentaire étant aspiré en aval de la pompe à haute pression (4).

5. Procédé selon la revendication n°4, sachant que le carburant étant aspiré par le régulateur d'alimentation en carburant (5) et une conduite de récupération de carburant (6) reliée au régulateur et au réservoir.
